# EUROPEAN PATENT APPLICATION

(11) **EP 4 502 881 A1**
(43) Date of publication of application: **05.02.2025**
(21) Application number: 23799511.3
(22) Date of filing: 02.05.2023
(51) Int. Cl.: G06N 20/00

(54) **LEARNING DEVICE, LEARNING METHOD, AND LEARNING PROGRAM**

(30) Priority: 02.05.2022 JP 2022076195
(71) Applicant: Mitsubishi Heavy Industries, Ltd., Tokyo 100-8332 (JP)
(72) Inventor: KATAOKA, Yujiro, Tokyo 100-8332 (JP); ITO, Masayuki, Tokyo 100-8332 (JP); MATSUNAMI, Natsuki, Tokyo 100-8332 (JP)
(74) Representative: Hoffmann Eitle
(86) International application number: PCT/JP2023/017147
(87) International publication number: WO 2023/214582

(57) **Abstract**

There is provided a learning device including: a processing unit that performs learning of a learning model of an agent, in which the learning model includes a hyperparameter, the learning includes imitation learning and reinforcement learning, the imitation learning causing the processing unit to perform learning of the hyperparameter of the learning model such that the agent executes a predetermined action in a predetermined state under a predetermined environment, the reinforcement learning causing the processing unit to perform learning of the hyperparameter of the learning model such that a reward assigned to the agent under the predetermined environment is maximized, and the processing unit executes: a step of setting a parameter value of the hyperparameter of the learning model; a step of executing the imitation learning by using the learning model after the setting; a step of evaluating the learning model after the imitation learning and extracting the evaluated learning model; and a step of executing the reinforcement learning by using the extracted learning model.

## Description

### Technical Field

The present disclosure relates to a learning device, a learning method, and a learning program for multi-agent.

### Background Art

In the related art, a learning device and a learning method of performing learning of a strategy by imitation learning based on learning data are known (for example, refer to PTL 1). In imitation learning, learning of a reward function according to a functional form of a reward is performed. Specifically, in imitation learning, learning of a strategy that is a rule for selecting an action of an agent is performed by using learning data for imitation learning in which a state and an action are associated with each other. Thereby, the agent outputs an optimal imitation action according to the state by using the strategy after the learning.

### Citation List

### Patent Literature

[PTL 1] International Publication No. WO2020/115904

### Summary of Invention

### Technical Problem

Here, as a learning model as a strategy, a neural network is used. The neural network is a network in which a plurality of nodes are connected. Parameters of the neural network include weights and biases between nodes, and the parameters are adjusted by learning. In addition, as the parameters of the neural network, there are hyperparameters such as the number of layers, the number of nodes, and the learning rate, which are set in advance. In general, since a hyperparameter is set based on empirical estimation, there is a possibility that a learning model with an inappropriate hyperparameter may be constructed. For this reason, it is necessary to set a hyperparameter, perform reinforcement learning, and then evaluate the learning model for each combination of the hyperparameters. As a result, it takes time.

Therefore, an object of the present disclosure is to provide a learning device, a learning method, and a learning program capable of appropriately and efficiently executing learning of a learning model including a hyperparameter.

### Solution to Problem

According to the present disclosure, there is provided a learning device including: a processing unit that performs learning of a learning model of an agent, in which the learning model includes a hyperparameter, the learning includes imitation learning and reinforcement learning, the imitation learning causing the processing unit to perform learning of the hyperparameter of the learning model such that the agent executes a predetermined action in a predetermined state under a predetermined environment, the reinforcement learning causing the processing unit to perform learning of the hyperparameter of the learning model such that a reward assigned to the agent under the predetermined environment is maximized, and the processing unit executes: a step of setting a parameter value of the hyperparameter of the learning model; a step of executing the imitation learning by using the learning model after the setting; a step of evaluating the learning model after the imitation learning and extracting the evaluated learning model; and a step of executing the reinforcement learning by using the extracted learning model.

According to the present disclosure, there is provided a learning method of performing learning of a learning model of an agent by using a learning device, in which the learning model includes a hyperparameter, the learning includes imitation learning and reinforcement learning, the imitation learning causing the learning device to perform learning of the hyperparameter of the learning model such that the agent executes a predetermined action in a predetermined state under a predetermined environment, the reinforcement learning causing the learning device to perform learning of the hyperparameter of the learning model such that a reward assigned to the agent under the predetermined environment is maximized, and the learning method causes the learning device to execute: a step of setting a parameter value of the hyperparameter of the learning model; a step of executing the imitation learning by using the learning model after the setting; a step of evaluating the learning model after the imitation learning and extracting the evaluated learning model; and a step of executing the reinforcement learning by using the extracted learning model.

According to the present disclosure, there is provided a learning program for performing learning of a learning model of an agent by using a learning device, in which the learning model includes a hyperparameter, the learning includes imitation learning and reinforcement learning, the imitation learning causing the learning device to perform learning of the hyperparameter of the learning model such that the agent executes a predetermined action in a predetermined state under a predetermined environment, the reinforcement learning causing the learning device to perform learning of the hyperparameter of the learning model such that a reward assigned to the agent under the predetermined environment is maximized, and the learning program causes the learning device to execute: a step of setting a parameter value of the hyperparameter of the learning model; a step of executing the imitation learning by using the learning model after the setting; a step of evaluating the learning model after the imitation learning and extracting the evaluated learning model; and a step of executing the reinforcement learning by using the extracted learning model.

### Advantageous Effects of Invention

According to the present disclosure, it is possible to appropriately and efficiently execute learning of the learning model including the hyperparameter.

### Brief Description of Drawings

Fig. 1 is a diagram for explaining learning using a learning model according to the present embodiment.
Fig. 2 is a diagram schematically illustrating a learning device according to the present embodiment.
Fig. 3 is a diagram illustrating a flow of a learning method according to the present embodiment.

### Description of Embodiments

Hereinafter, an embodiment according to the present invention will be described in detail based on the drawings. Note that the present invention is not limited to the embodiment. In addition, components in the embodiment described below include those that can be easily replaced by those skilled in the art, or those that are substantially the same. Further, the components described below can be combined as appropriate, and in a case where a plurality of embodiments are present, the embodiments can be combined.

### [Embodiment]

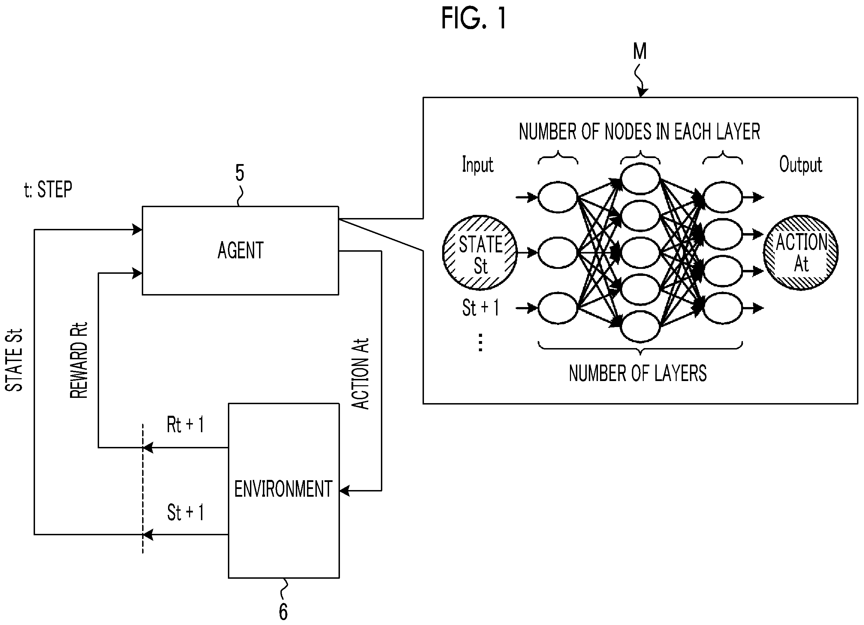

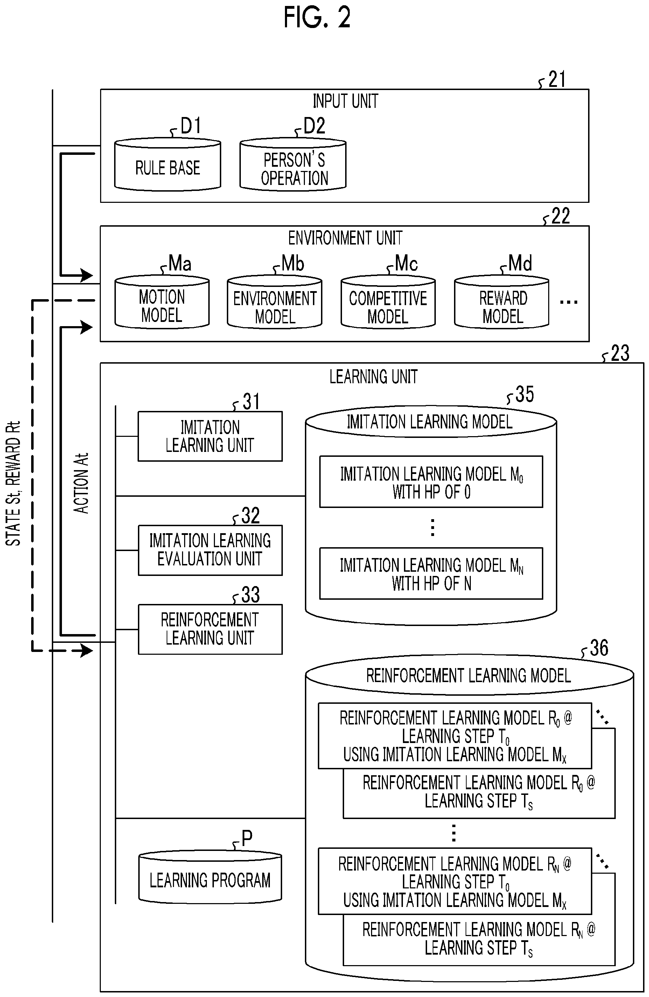

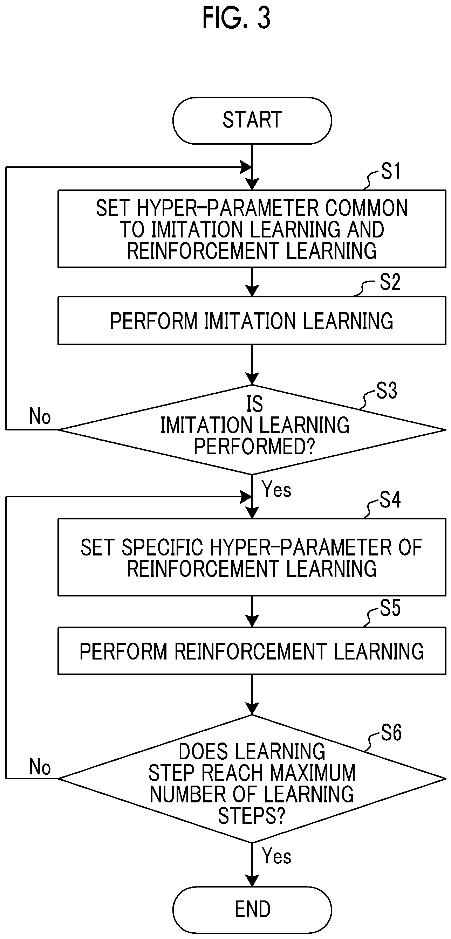

A learning device 10 and a learning method according to the present embodiment are a device and a method of performing learning of a learning model including a hyperparameter. Fig. 1 is a diagram for explaining learning using a learning model according to the present embodiment. Fig. 2 is a diagram schematically illustrating a learning device according to the present embodiment. Fig. 3 is a diagram illustrating a flow of a learning method according to the present embodiment.

### (Learning using Learning Model)

First, learning using a learning model M will be described with reference to Fig. 1. The learning model M is mounted on an agent 5 that executes an action At. As the target agent 5, for example, a machine capable of executing an operation for a robot, a vehicle, a vessel, an aircraft, or the like is applied. The agent 5 executes a predetermined action At under a predetermined environment 6 by using the learning model M.

As illustrated in Fig. 1, the learning model M is a neural network including a plurality of nodes. The neural network is a network in which a plurality of nodes are connected, and has a plurality of layers. The plurality of nodes are provided in each of the layers. Parameters of the neural network include weights and biases between the nodes. In addition, as the parameters of the neural network, there are hyperparameters such as the number of layers, the number of nodes, and a learning rate. In the present embodiment, in the learning of the learning model M, learning on the learning model M including the hyperparameters is performed.

Next, the learning using the learning model M will be described. As the learning, there are imitation learning and reinforcement learning. The imitation learning is supervised learning. The agent 5 performs learning of the hyperparameters of the learning model M such that a predetermined action At is executed in a case where a predetermined state St is input under a predetermined environment 6. The reinforcement learning is an unsupervised learning. The agent 5 performs learning of the weights and the biases between the nodes in the learning model M such that a reward Rt assigned under a predetermined environment 6 is maximized.

In the reinforcement learning, the agent 5 acquires a state St from the environment 6 (an environment unit 22 to be described later), and also acquires a reward Rt from the environment 6. In addition, the agent 5 selects an action At from the learning model M based on the acquired state St and the acquired reward Rt. In a case where the action At selected by the agent 5 is executed, the state St of the agent 5 in the environment 6 transitions to a state St+1. In addition, a reward Rt+1 based on the executed action At, the state St before the transition, and the state St+1 after the transition is assigned to the agent 5. Further, in the reinforcement learning, the above learning is repeated by the predetermined number of learning steps for evaluation such that the reward Rt assigned to the agent 5 is maximized.

In the imitation learning, training data in which a predetermined state St and a predetermined action At are associated with each other is used. The training data is, for example, data of a predetermined action At selected by an expert who operates the agent 5 in a case where a predetermined state St is reached under a predetermined environment 6, and is also referred to as expert data. That is, the expert data is data in which a predetermined state St and a predetermined action At are associated with each other. In the imitation learning, in a case where the predetermined state St of the training data is input to the learning model M of the agent 5, learning of the weights and the biases between the nodes in the learning model M is performed such that an action At to be output from the learning model M becomes the predetermined action At of the training data.

Here, the environment 6 is an environment in which the reward Rt is sparse. The environment in which the reward Rt is sparse is an environment in which the reward Rt is difficult to be assigned for the action At executed by the agent 5, and is an environment in which a time until the reward Rt is assigned after the action At is executed is sparse (the time interval is wide). That is, the environment in which the reward Rt is sparse is an environment in which an immediate reward is not assigned to the action At executed by the agent 5 and the reward is assigned after a certain time period or after subsequent actions At+1 to At+n.

### (Learning Device)

Next, the learning device 10 will be described with reference to Fig. 2. The learning device 10 executes imitation learning and reinforcement learning of the agent 5 in an environment serving as a virtual space. The learning device 10 includes an input unit 21, an environment unit 22, and a learning unit 23. Note that the environment unit 22 and the learning unit 23 include a processing unit that performs learning of the learning model of the agent and a storage unit that stores various data to be used in the learning. The processing unit includes, for example, an integrated circuit such as a central processing unit (CPU). The storage unit 12 is an arbitrary storage device such as a semiconductor storage device or a magnetic storage device. Note that the hardware configuration of the learning device 10 is not particularly limited.

The input unit 21 is, for example, an input device such as a keyboard and a mouse. The input unit 21 is connected to the environment unit 22 and the learning unit 23, and inputs the training data to be used for imitation learning to the environment unit 22 and the learning unit 23. Examples of the training data such as expert data include a rule base D1 in which a rule is defined in advance to take a predetermined action for a predetermined state, and person's operation data D2 that is an action taken by an expert for a predetermined state.

The environment unit 22 provides an environment in which the reward is sparse to the agent 5. Specifically, the environment unit 22 assigns a reward Rt to the agent 5 or derives a state St of the agent 5 for transition by the action At. The environment unit 22 stores various models such as a motion model Ma, an environment model Mb, and a competitive model Mc. The motion model Ma, the environment model Mb, and the competitive model Mc are models that receive the action At performed by the agent 5 as an input and calculate the state St of the agent 5 as an output. The calculated state St is output to the learning unit 23. In addition, the environment unit 22 stores a reward model Md that calculates a reward. The reward model Md is a model that receives the action At performed by the agent 5, the state St, and the state St+1 as a transition destination as inputs and calculates a reward Rt to be assigned to the agent 5 as an output. The calculated reward Rt is output to the learning unit 23.

The learning unit 23 executes learning of the learning model M. The learning unit 23 executes imitation learning and reinforcement learning as learning. The learning unit 23 includes an imitation learning unit 31 that performs imitation learning, an imitation learning evaluation unit 32 that evaluates a learning result of the imitation learning, and a reinforcement learning unit 33 that performs reinforcement learning. In addition, the learning unit 23 includes a database 35 that stores imitation learning models M₀ to M_{N} as learning results obtained by the imitation learning, and a database 36 that stores reinforcement learning models R₀ to R_{N} as learning results obtained by the reinforcement learning.

The imitation learning unit 31 performs learning of the learning model M while updating the hyperparameters, by using training data such as expert data, such that, under a predetermined environment, a predetermined action At is executed in a case where the agent 5 reaches a predetermined state St. In addition, the imitation learning unit 31 acquires imitation learning models M₀ to M_{N} as learning results of the imitation learning by executing learning of the learning model M, and stores, in the database 35, the imitation learning model M acquired each time the hyperparameter is updated. Assuming that an initial value of the hyperparameter is 0 and the update value is N, the database 35 stores the learning models from the imitation learning model M₀ to the imitation learning model M_{N}.

The imitation learning evaluation unit 32 evaluates the imitation learning models M₀ to M_{N} stored in the database 35. The imitation learning evaluation unit 32 executes evaluation based on a matching degree by using, as an evaluation index, a matching degree between the action At based on the training data and the actions At output from the imitation learning models M₀ to M_{N}. Specifically, the imitation learning evaluation unit 32 inputs the predetermined state St in the training data to the imitation learning models M₀ to M_{N} and determines whether or not the actions At output from the imitation learning models M₀ to M_{N} match with the predetermined action At in the training data. Note that, as an index indicating the matching degree, for example, a Kullback-Leibler (KL) divergence (a KL distance) is used. The KL divergence is an index indicating a similarity between a probability distribution of the state St and the action At in the training data and a probability distribution of the state St and the action At in the imitation learning models M₀ to M_{N}. As the KL divergence is smaller, the similarity is higher, and as the KL divergence is larger, the similarity is lower. In a case where the KL divergence is smaller than a preset threshold value, the imitation learning evaluation unit 32 determines that the action At based on the training data and the action At output from the imitation learning models M₀ to M_{N} match with each other, and determines that imitation by the imitation learning model M is realized. On the other hand, in a case where the KL divergence is equal to or larger than a preset threshold value, the imitation learning evaluation unit 32 determines that the action At based on the training data and the action At output from the imitation learning model M do not match with each other, and determines that imitation by the imitation learning models M₀ to M_{N} is not realized.

The reinforcement learning unit 33 executes learning based on the reward Rt assigned from the environment unit 22. In addition, the reinforcement learning unit 33 executes reinforcement learning of the imitation learning model Mₓ that is evaluated as a model in which imitation is realized by the imitation learning evaluation unit 32. Specifically, the reinforcement learning unit 33 executes reinforcement learning of the imitation learning model Mₓ by the predetermined number of learning steps T while updating the hyperparameter such that the reward Rt assigned to each agent 5 is maximized. In addition, the reinforcement learning unit 33 acquires reinforcement learning models R₀ to R_{N} as learning results of reinforcement learning by executing reinforcement learning of the imitation learning model Mₓ, and stores, in the database 36, the reinforcement learning models R₀ to R_{N} acquired each time the hyperparameter is updated. Assuming that an initial value of the hyperparameter is 0 and an update value of the hyperparameter is N, and that an initial step of the learning steps T is 0 and a final step of the learning steps T is S, the database 35 stores the learning models from the reinforcement learning model R₀ to the reinforcement learning model R_{N}, and stores the reinforcement learning model R from a learning step T₀ to a learning step Ts in each of the reinforcement learning models R₀ to R_{N}.

### (Learning Method)

Next, a learning method executed by the learning device 10 will be described with reference to Fig. 3. In the learning method, first, the learning device 10 executes a step of setting a parameter value of the hyperparameter of the learning model M (step S1). In step S1, the parameter value of the hyperparameter is arbitrarily set, and for example, may be set based on a learning result of imitation learning.

Subsequently, in the learning method, a step of executing imitation learning using the learning model M after the setting is executed (step S2). In step S2, the imitation learning unit 31 of the learning device 10 executes imitation learning of the learning model M in which the parameter value of the hyperparameter is set in step S1, by using the training data. In addition, in step S2, the imitation learning models M₀ to M_{N} obtained by executing imitation learning are stored in the database 35 by the imitation learning unit 31.

Thereafter, in the learning method, a step of evaluating the imitation learning model M after the imitation learning (step S3) is executed. In step S3, the imitation learning evaluation unit 32 of the learning device 10 determines whether or not imitation by the imitation learning model M is realized (whether or not imitation learning is performed) by determining whether or not a predetermined state St and a predetermined action At in the training data match with a predetermined state St and a predetermined action At in the imitation learning model M. In step S3, in a case where the imitation learning evaluation unit 32 determines that imitation learning is performed (Yes in step S3), the imitation learning model Mx that is evaluated as a model in which imitation learning is performed is extracted as the reinforcement learning model R. On the other hand, in step S3, in a case where the imitation learning evaluation unit 32 determines that imitation learning is not performed (No in step S3), the process proceeds to step S1 again, and the parameter value of the hyperparameter is set again. That is, in step S1 to step S3, one imitation learning model Mx that is evaluated as a model in which imitation learning is performed is searched for and is acquired.

Note that, in the present embodiment, in step S1 to step S3, a method of searching for one imitation learning model Mx is described. On the other hand, a plurality of imitation learning models Mx that are evaluated as models in which imitation learning is performed may be acquired, and the plurality of imitation learning models Mx may be extracted as the reinforcement learning model R.

After step S3, in the learning method, a step of setting a parameter value of the hyperparameter of the reinforcement learning model R is executed (step S4). In step S4, the parameter value of the hyperparameter is arbitrarily set. Here, a type of the hyperparameter set in step S1 (imitation learning) and a type of the hyperparameter set in step S4 (reinforcement learning) may be different from each other or may be the same, and are not particularly limited. Specifically, as the type of the hyperparameter, in step S1, the number of layers and the number of nodes in each layer are set, and in step S4, in addition to the type of the hyperparameter in step S1, a discount rate γ, a random action probability ε, and the like are further set.

In addition, in the learning method, a step of executing reinforcement learning using the reinforcement learning model R after the setting (after the extraction) is executed (step S5). In step S5, the reinforcement learning unit 33 of the learning device 10 executes reinforcement learning of the reinforcement learning model R in which the parameter value of the hyperparameter is set in step S4 such that the reward Rt assigned to the agent 5 is maximized. In addition, in step S5, the reinforcement learning unit 33 stores the reinforcement learning models R₀ to R_{N} obtained by executing reinforcement learning in the database 36.

Next, in the learning method, the reinforcement learning unit 33 of the learning device 10 determines whether or not the learning step T reaches the final step S (step S6). In step S6, in a case where the reinforcement learning unit 33 determines that the learning step T reaches the final step S (Yes in step S6), reinforcement learning is ended, and a series of learning methods is ended. Note that, after reinforcement learning is ended, the trained reinforcement learning models R₀ to R_{N} may be evaluated, and the reinforcement learning model R may be selected based on the evaluation result. On the other hand, in step S6, in a case where the reinforcement learning unit 33 determines that the learning step T does not reach the final step S (No in step S6), the process proceeds to step S4, and the process is repeatedly executed until the learning step T reaches the final step S.

In this manner, the learning unit 23 that executes step S1 to step S6 described above functions as a processing unit for causing the agent 5 to execute imitation learning and reinforcement learning. In addition, the learning device 10 stores a learning program P for executing the above learning method in a storage unit of the learning device 10.

As described above, the learning device 10, the learning method, and the learning program P according to the present embodiment are understood, for example, as follows.

According to a first aspect, there is provided a learning device 10 including: a processing unit that performs learning of a learning model M of an agent 5, in which the learning model M includes a hyperparameter, the learning includes imitation learning and reinforcement learning, the imitation learning causing the processing unit to perform learning of the hyperparameter of the learning model M such that the agent 5 executes a predetermined action in a predetermined state under a predetermined environment, the reinforcement learning causing the processing unit to perform learning of the hyperparameter of the learning model M such that a reward assigned to the agent 5 under the predetermined environment is maximized, and the processing unit executes: a step S1 of setting a parameter value of the hyperparameter of the learning model M; a step S2 of executing the imitation learning by using the learning model M after the setting; a step S3 of evaluating the learning model M after the imitation learning and extracting the evaluated learning model M; and a step S5 of executing the reinforcement learning by using the extracted learning model M.

According to this configuration, it is possible to extract the learning model M with high evaluation in the imitation learning, and to perform reinforcement learning on the extracted learning model M. That is, reinforcement learning can be performed using the learning model obtained by performing learning with the hyperparameter having high imitability. Thus, it is possible to appropriately and efficiently execute learning of the learning model including the hyperparameter.

In a second aspect, the environment is an environment in which the reward is sparse.

According to this configuration, even in an environment in which the reward is sparse, it is possible to perform learning of the learning model including the hyperparameter by imitation learning. Therefore, even in a case where learning based on the reward is performed in reinforcement learning, it is possible to appropriately and efficiently execute learning of the learning model including the hyperparameter.

In a third aspect, in the step S3 of extracting the learning model, in a case where an evaluation result in the step of evaluating the learning model M satisfies an evaluation index, one learning model that satisfies the evaluation index is extracted.

According to this configuration, one learning model M based on the evaluation index is extracted, and thus, it is not necessary to perform reinforcement learning on a plurality of learning models M. Therefore, it is possible to improve the efficiency of learning in reinforcement learning.

In a fourth aspect, in the step S1 of setting the parameter value, in a case where an evaluation result in the step of evaluating the learning model M does not satisfy an evaluation index, a new parameter value is set.

According to this configuration, imitation learning can be performed until the hyperparameter that satisfies the evaluation index is found.

In a fifth aspect, in the step S3 of extracting the learning model, evaluation based on a matching degree between a predetermined state and a predetermined action that are to be trained in the imitation learning under a predetermined environment and a predetermined state and a predetermined action in the learning model under the predetermined environment is executed.

According to this configuration, it is possible to evaluate whether or not the learning model realizes imitation, based on the matching degree of the predetermined states and the predetermined actions.

In a sixth aspect, as the matching degree, a KL divergence is used.

According to this configuration, it is possible to appropriately evaluate the matching degree of the actions by using the KL divergence (KL distance).

According to a seventh aspect, there is provided a learning method of performing learning of a learning model M of an agent 5 by using a learning device 10, in which the learning model M includes a hyperparameter, the learning includes imitation learning and reinforcement learning, the imitation learning causing the learning device 10 to perform learning of the hyperparameter of the learning model M such that the agent 5 executes a predetermined action in a predetermined state under a predetermined environment, the reinforcement learning causing the learning device 10 to perform learning of the hyperparameter of the learning model M such that a reward assigned to the agent 5 under the predetermined environment is maximized, and the learning method causes the learning device 10 to execute: a step S1 of setting a parameter value of the hyperparameter of the learning model M; a step S2 of executing the imitation learning by using the learning model M after the setting; a step S3 of evaluating the learning model M after the imitation learning and extracting the evaluated learning model M; and a step S5 of executing the reinforcement learning by using the extracted learning model M.

According to this configuration, it is possible to extract the learning model M with high evaluation in the imitation learning, and to perform reinforcement learning on the extracted learning model M. That is, reinforcement learning can be performed using the learning model obtained by performing learning with the hyperparameter having high imitability. Thus, it is possible to appropriately and efficiently execute learning of the learning model including the hyperparameter.

According to an eighth aspect, there is provided a learning program P for performing learning of a learning model M of an agent 5 by using a learning device 10, in which the learning model M includes a hyperparameter, the learning includes imitation learning and reinforcement learning, the imitation learning causing the learning device 10 to perform learning of the hyperparameter of the learning model M such that the agent 5 executes a predetermined action in a predetermined state under a predetermined environment, the reinforcement learning causing the learning device 10 to perform learning of the hyperparameter of the learning model M such that a reward assigned to the agent 5 under the predetermined environment is maximized, and the learning program P causes the learning device 10 to execute: a step S1 of setting a parameter value of the hyperparameter of the learning model M; a step S2 of executing the imitation learning by using the learning model M after the setting; a step S3 of evaluating the learning model M after the imitation learning and extracting the evaluated learning model M; and a step S5 of executing the reinforcement learning by using the extracted learning model M.

According to this configuration, it is possible to extract the learning model M with high evaluation in the imitation learning, and to perform reinforcement learning on the extracted learning model M. That is, reinforcement learning can be performed using the learning model obtained by performing learning with the hyperparameter having high imitability. Thus, it is possible to appropriately and efficiently execute learning of the learning model including the hyperparameter.

### Reference Signs List

5: agent
10: learning device
21: input unit
22: environment unit
23: learning unit
31: imitation learning unit
32: imitation learning evaluation unit
33: reinforcement learning unit
35: database
36: database
D1: rule base
D2: person's operation data
M: learning model
Ma: motion model
Mb: environment model
Mc: competitive model
Md: reward model
P: learning program

## Claims

1. A learning device comprising:
a processing unit that performs learning of a learning model of an agent,
wherein the learning model includes a hyperparameter,
the learning includes imitation learning and reinforcement learning, the imitation learning causing the processing unit to perform learning of the hyperparameter of the learning model such that the agent executes a predetermined action in a predetermined state under a predetermined environment, the reinforcement learning causing the processing unit to perform learning of the hyperparameter of the learning model such that a reward assigned to the agent under the predetermined environment is maximized, and
the processing unit executes:
a step of setting a parameter value of the hyperparameter of the learning model;
a step of executing the imitation learning by using the learning model after the setting;
a step of evaluating the learning model after the imitation learning and extracting the evaluated learning model; and
a step of executing the reinforcement learning by using the extracted learning model.

2. The learning device according to Claim 1,
wherein the environment is an environment in which the reward is sparse.

3. The learning device according to Claim 1 or 2,
wherein, in the step of extracting the learning model, in a case where an evaluation result of the learning model satisfies an evaluation index, one learning model that satisfies the evaluation index is extracted.

4. The learning device according to any one of Claims 1 to 3,
wherein, in the step of setting the parameter value, in a case where an evaluation result in the step of evaluating the learning model does not satisfy an evaluation index, a new parameter value is set.

5. The learning device according to any one of Claims 1 to 4,
wherein, in the step of extracting the learning model, evaluation based on a matching degree between a predetermined state and a predetermined action that are to be trained in the imitation learning under a predetermined environment and a predetermined state and a predetermined action in the learning model under the predetermined environment is executed.

6. The learning device according to Claim 5,
wherein, as the matching degree, a KL divergence is used.

7. A learning method of performing learning of a learning model of an agent by using a learning device,
wherein the learning model includes a hyperparameter,
the learning includes imitation learning and reinforcement learning, the imitation learning causing the learning device to perform learning of the hyperparameter of the learning model such that the agent executes a predetermined action in a predetermined state under a predetermined environment, the reinforcement learning causing the learning device to perform learning of the hyperparameter of the learning model such that a reward assigned to the agent under the predetermined environment is maximized, and
the learning method causes the learning device to execute:
a step of setting a parameter value of the hyperparameter of the learning model;
a step of executing the imitation learning by using the learning model after the setting;
a step of evaluating the learning model after the imitation learning and extracting the evaluated learning model; and
a step of executing the reinforcement learning by using the extracted learning model.

8. A learning program for performing learning of a learning model of an agent by using a learning device,
wherein the learning model includes a hyperparameter,
the learning includes imitation learning and reinforcement learning, the imitation learning causing the learning device to perform learning of the hyperparameter of the learning model such that the agent executes a predetermined action in a predetermined state under a predetermined environment, the reinforcement learning causing the learning device to perform learning of the hyperparameter of the learning model such that a reward assigned to the agent under the predetermined environment is maximized, and
the learning program causes the learning device to execute:
a step of setting a parameter value of the hyperparameter of the learning model;
a step of executing the imitation learning by using the learning model after the setting;
a step of evaluating the learning model after the imitation learning and extracting the evaluated learning model; and
a step of executing the reinforcement learning by using the extracted learning model.
